# EUROPÄISCHE PATENTSCHRIFT

(11) **EP 1 080 562 B1**
(45) Veröffentlichungstag und Bekanntmachung des Hinweises auf die Patenterteilung: **14.08.2002**
(21) Anmeldenummer: 99917849.4
(22) Anmeldetag: 23.03.1999
(51) Int. Cl.: H04L 12/56, H04Q 11/04

(54) **VERFAHREN ZUM ENTFERNEN VON ATM-ZELLEN AUS EINER ATM-KOMMUNIKATIONSEINRICHTUNG**
METHOD FOR REMOVING ATM CELLS FROM AN ATM COMMUNICATIONS DEVICE
PROCEDE POUR ELIMINER DES CELLULES A MODE DE TRANSFERT ASYNCHRONE (MTA) D'UN DISPOSITIF DE COMMUNICATION MTA MODE DE TRANSFERT ASYNCHRONE (MTA)

(30) Priorität: 29.05.1998 EP 98109876
(43) Veröffentlichungstag der Anmeldung: 07.03.2001
(73) Patentinhaber: SIEMENS AKTIENGESELLSCHAFT, 80333 München (DE)
(72) Erfinder: HEISS, Herbert, D-82008 Unterhaching (DE); THUDT, Raimar, D-80995 München (DE)
(86) Internationale Anmeldenummer: EP9901986
(87) Internationale Veröffentlichungsnummer: WO9963716

(56) Entgegenhaltungen:
- EP-A- 0 596 200
- EP-A- 0 744 850
- WO-A-96/29806
- ROMANOW A ET AL: "DYNAMICS OF TCP TRAFFIC OVER ATM NETWORKS" IEEE JOURNAL ON SELECTED AREAS IN COMMUNICATIONS, Bd. 13, Nr. 4, 1. Mai 1995 (1995-05-01), Seiten 633-641, XP000501259

## Beschreibung

Die Erfindung betrifft ein Verfahren gemäß dem Patentanspruch 1.

Bei herkömmlichen Paket-Kommunikationssystemen weist ein Paket eine vergleichsweise große und variable Länge auf. Ein System zur Übertragung von Informationen in Paketen mit festen, vorgegebenen Längen wird als ATM (Asynchronous Transfer Mode)-System bezeichnet. Mit einem solchen System lassen sich Sprach-, Video- und Datensignale auf die gleiche Weise verarbeiten und übertragen. Die einzelnen Pakete werden üblicherweise Zellen genannt. In den Zellen ist jeweils ein Zellenkopf enthalten, dessen Information eine Vermittlung bzw. Zuordnung der jeweiligen Zelle ermöglicht. In ATM-Kommunikationseinrichtungen, insbesondere Kommunikationsnetzeinrichtungen, ist eine Hochgeschwindigkeits- und Breitband-Übertragung mit einer Übertragungsrate von mehr als 150 Mb/s möglich.

Ein Problem bei ATM-Kommunikationseinrichtungen ist die Höhe der Übertragungsrate auf einer Übertragungsstrecke, wenn sich dort ein Stau von ATM-Zellen gebildet hat. Diese Problematik wird in der deutschen Patentanmeldung 19810058.2 detailliert beschrieben. Dort werden ATM-Systeme angesprochen, in denen ATM-Zellen jeweils zu mehreren einem gemeinsamen Rahmen zugeordnet sind. Bei diesen Rahmen handelt es sich im engeren Sinne um Datenpakete mit variabler Länge. Wenn beispielsweise eine Zelle eines solchen Rahmens verloren gegangen oder beschädigt worden ist, ist es unerwünscht,daß die verbleibenden Zellen desselben Rahmens über eine Übertragungsstrecke einer ATM-Einrichtung weiter übertragen werden, da nicht mehr die vollständige Information des Rahmens am Ende der Übertragungsstrecke ankommen wurde. Das ATM-System wäre damit unnötigerweise dynamisch belastet. Insbesondere bei einem Stau auf der Übertragungsstrecke kommt es daher darauf an, die verbleibenden Zellen des Rahmens möglichst schnell und effektiv zu entfernen.

Es ist daher vorgeschlagen worden,ATM-Zellen eines bestimmten Rahmens jeweils beim Eintreffen einer einzelnen ATM-Zelle am Ende einer Warteschlange zu entfernen. Solche Warteschlangen dienen insbesondere der Verwaltung einer Reihenfolge von ATM-Zellen am Ende und/oder am Anfang einer Übertragungsstrecke. Gemäß einem in der oben genannten Patentanmeldung beschriebenen Verfahren, das als Partial Packet Discard (im folgenden PPD) bezeichnet wird, werden die erste und, falls vorhanden, weitere Zellen des Rahmens, die sich bereits in der Warteschlange befinden, nicht entfernt, sondern lediglich alle neu eintreffenden Zellen des Rahmens entfernt, mit Ausnahme der letzten Zelle des Rahmens.Das PPD Verfahren hat den Nachteil, daß zumindest die erste und die letzte Zelle des Rahmens weiterhin in der Warteschlange verbleiben müssen.

Aus der oben genannten Patentanmeldung ist ein weiteres Verfahren bekannt, gemäß dem alle Zellen eines Rahmens, von der ersten bis zur letzten Zelle beim Eintreffen in eine Warteschlange aus der ATM-Kommunikationseinrichtung entfernt werden. Dieses Early Packet Discard (im folgenden EPD) genannte Verfahren hat den Vorteil, daß keine Restzellen eines beschädigten oder aus anderen Gründen zu entfernenden Rahmens übrigbleiben und somit der maximal mögliche Platz für andere ATM-Zellen zur Verfügung steht. Das EPD Verfahren ist jedoch nicht auf Rahmen anwendbar, deren erste Zelle bereits der Warteschlage hinzugefügt worden ist.

Die Übertragung von Informationen im Internet ist ein Beispiel für Kommunikationsnetze, über die Informationen in Paketen mit vergleichsweiser großer und variabler Länge übertragen werden. Hier wird das Internet-Protokoll TCP/IP verwendet, das die Übertragung von Rahmen mit variabler Lange unterstützt. In der Praxis weisen diese Netze eine Schnittstelle zu ATM-Netzen auf. Aus diesem Grunde müssen die in Datenpaketen enthaltenen Informationen in ATM-Zellen umgesetzt werden und umgekehrt.

Hierzu wird beispielsweise ein Rahmen-Anfangskennwert gespeichert, das die der ersten ATM-Zelle des Rahmens unmittelbar vorgeordnete ATM-Zelle in der Warteschlange bezeichnet. Diese Information ist üblicherweise im Zellenkopf der letzten Zelle des Rahmens vorhanden, nämlich in der Regel in dem sogenannten AAU-Bit in dem Zellentypfeld (payload type field) des Zellenkopfes. Weiterhin wird eine Numerierung der ATM-Zellen vorgenommen, so daß letztendlich die Mehrzahl der ATM-Zellen einem Datenpaket zuordenbar ist.

In der deutschen Patentanmeldung 198 100 58.2 wird ein weiteres Verfahren beschrieben, wie ATM-Zellen beim Auftreten von Überlastsituationen in einem Rahmens entfernt werden können. Dieses Verfahren, das auch als LPD Verfahren bezeichnet wird, ist insbesondere dann nützlich, wenn entschieden wird, den zweiten Teil des Rahmens zu verwerfen, während der erste Teil noch sich in der Warteschlange des ATM-Systems befindet. In diesem Fall wird der erste Teil des Rahmens aus der Warteschlange entfernt und die verbleibenden Zellen werden wie im Falle des EPD Verfahrens behandelt. Dabei entsteht jedoch das Problem einer ineffizienten Behandlung der Zellen im Falle der Überlast.

Aus der Druckschrift Romanow et al: Dynamics of TCP Traffic over ATM Networks, IEEE Journal on selected areas in communications, Bd.13, No. 4, 1.Mai 1995, Seiten 633-641 ist ein System mit TCP-Verkehr offenbart, der über ATM-Netze geleitet wird. Die Lösung gemäß dieser Druckschrift offenbart einen ersten Algorithmus (partial packet discard), der immer dann angewendet wird, wenn eine Zelle verworfen wird. Gemäß dem early packet discard Verfahren werden ganze Rahmen verworfen, nur wenn die maximale Anzahl überschritten ist. Dies erfolgt in Abhängigkeit des Füllstandes der Warteschlange.

Der Erfindung liegt die Aufgabe zugrunde, einen Weg aufzuzeigen, wie Zellen effizient im Überlastfall zu behandeln sind.

Vorteilhaft an der Erfindung ist insbesondere, daß Regeln aufgestellt werden, durch deren Anwendung das PPD-Verfahren nur noch sehr eingeschränkt zur Anwendung gelangt.

Vorteilhafte Ausbildungen der Erfindung sind in den Unteransprüchen vorgesehen.

Die Erfindung wird im folgenden anhand eines Ausführungsbeispiels näher erläutert.

Es zeigen:
- Fig. 1: den ersten Teil des Algorithmus, der die Zellen bei Zellenankunft behandelt,
- Fig. 2: den zweiten Teil des Algorithmus, der eine Entscheidungsfunktion beschreibt, nach deren Maßgabe die Zellen verworfen werden.

Die Erfindung geht von der Voraussetzung aus, daß ATM-Zellen den Warteschlangen einer ATM-Kommunikationseinrichtung zugeführt werden. Einige der Zellen werden verworfen, während die verbleibenden Zellen die Warteschlangen zu einem späteren Zeitpunkt verlassen. Für jede Verbindung existiert eine bestimmte maximale Rahmengröße MFS, die in Zellen gemessen wird, wobei diese Größe von der Verbindung abhängig ist. Weiterhin wird davon ausgegangen, daß das CLP-Bit im Zellentypfeld (payload type field) des Zellenkopfes der ATM-Zelle im ATM-Knoten ausgewertet wird. Der Anwender kann Informationen in hochprioren und niederprioren Rahmen senden. Die Zellen der hochprioren Rahmen weisen CLP = 0 auf (nicht markiert), während die Zellen mit niederprioren Rahmen CLP = 1 (markiert) aufweisen.

Bei allen in Betracht gezogenen Verbindungen wird davon ausgegangen, daß die zugehörigen Zellen in Rahmen organisiert sind, wobei das AAU-Bit im Pay-Load-Typ-Feld des Headers der letzten Zelle des Rahmens gesetzt ist. Alle Zellen sollen anwendungsbezogene Informationen aufnehmen. Weiterhin sollen alle in Warteschlangen gespeicherte ATM-Zellen warteschlangenspezifische Markierungen QID aufweisen, wobei die Warteschlangen selbst verbindungsspezifisch organisiert sind. Die Warteschlangen sind als FIFO-Warteschlange sind in Form einer einer geordneten Liste von ATM-Zellen ausgebildet.

Im folgenden soll die Datenstruktur der Warteschlangen, der globalen Konstanten und der globalen Variablen definiert werden. Zunächst werden einzelne Operationen vorgestellt, die an den Zellen ausgeführt werden können. Es wird angenommen, daß jede der Zellen eine eindeutige Kennung besitzt, die mit P_cell bezeichnet wird. Die Operationen sind sind im einzelnen:

### Zellen-Operationen:

Die folgenden Operationen werden mit ATM-Zellen durchgeführt, denen eine gültige Zellenidentifikationsnummer P_cell zugeordnet ist. Hierbei gilt:
- end_of_frame(P_cell): wird auf den Wert TRUE gesetzt, wenn das Ende des Rahmens erreicht ist,
andernfalls wird diese Variable auf den Wert FALSE gesetzt
- Discard_cell(P_cell): verwirft Zellen mit der Identifikationsnummer P_cell
- Decide_cell (P_cell): bezeichnet den Algorithmus wie er weiter unten näher erläutert wird.

### Operationen der Warteschlangen-Datenstruktur:

Die folgenden Operationen können in der Warteschlange ausgeführt werden:
- append_cell(P_cell): fügt die Identifikationsnummer P_cell am Ende einer Warteschlange ein
- remove_last_frame: der LPD-Algorithmus verwirft alle Zellen des in Frage kommenden Rahmens
die Variable gibt den Wert TRUE zurück, wenn der LPD-Algorithmus auf die Verbindung anwendbar ist,
andernfalls den Wert FALSE.

### Operation im Pufferinhalt:

Die folgenden Operationen können im Pufferinhalt durchgeführt werden:
- Buffer_check_0: gibt den Wert TRUE zurück, wenn der Pufferinhalt anzeigt, daß hochpriore Rahmen (CLP = 0) verworfen werden sollen andernfalls wird FALSE zurückgegeben
- Buffer_check_1: gibt den Wert TRUE zurück, wenn der Pufferinhalt anzeigt, daß niederpriore Rahmen (CLP = 1) verworfen werden sollen andernfalls wird FALSE zurückgegeben

### Datenstrukturen einer Warteschlange:

Für jede Verbindung und der dieser zugeordnete Warteschlange gibt es eine Identifikationsnummer QID. Damit werden folgende Daten gespeichert:
- Anzeige ob die Variable "full packet discard" sich auf die Zellen des gegenwärtigen Rahmens (FPD_flag) anwenden läßt. Dies ist gleichbedeutend mit der Aussage, daß der LPD- oder EPD-Algorithmus angewendet wird.
- Anzeige, ob PPD-Algorithmus auf die Zellen des gegenwärtigen Rahmens (PPD_flag) angewendet wird.
- die Variable "logical queue length" bezeichnet einen Zellen-Zähler der die gegenwärtige Anzahl der Zellen in der Warteschlange angibt.
- die Variable S_EPD_0 bezeichnet die feste Schwelle einer Warteschlange für die Anwendung des EPD-Algorithmus auf niederpriore Zellen
- die Variable MFS bezeichnet die maximale Rahmengröße
- die Variable Current_frame_length bezeichnet einen Zellenzähler, der für nicht verworfene Zellen der Verbindung um 1 erhöht wird. Die Variable wird zurückgesetzt bei Eintreffen der letzten Zelle eines Rahmens.

### Globale Konstanten:

Folgende globale Konstanten werden verwendet:
- die Konstante S_PPD_0 bezeichnet eine feste obere Grenze der Warteschlange (für alle QID's)
- die Konstante S_EPD_1 bezeichnet die feste Schwelle für early packet discard für CLP1 Zellen (für alle QID's)
In anderen Varianten des Algorithmus können die globalen Konstanten verschieden sein für verschiedene Gruppen von Verbindungen oder sie können verbindungsspezifisch sein.

Folgende Anfangswerte werden zugewiesen:
FPD_flag = FALSE
PPD_flag = FALSE
Current_frame_length = 0

Weiterhin gelten die folgenden Beziehungen für die obengenannten Konstanten:
S_EPD_1>0
S_PPD_1=S_EPD_1+MFS
S_EPD_0>S_PPD_1
S_PPD_0>S_EPD_0+MFS

Das erfindungsgemäße Verfahren besteht aus insgesamt 2 Teilen. Im ersten Teil gelangt der Algorithmus bei Zellenankunft zum Ablauf, während im zweiten Teil ein Entscheidungsalgorithmus gesteuert wird.

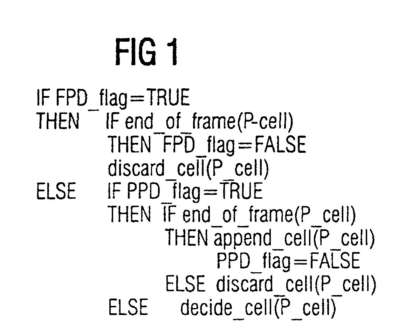

In Figur 1 ist der Algorithmus aufgezeigt, wie er bei Ankunft einer ATM-Zelle zum Ablauf gelangt. Demgemäß wird zunächst das FPD_flag überprüft. Wenn das FPD_flag den Wert TRUE angenommen hat, wird die Zelle verworfen. Wenn diese Zelle die letzte Zelle des Rahmens war, wird der FPD-Algorithmus nicht auf die Ankunft der nächsten Zellen derselben Verbindung angewendet. Wenn das FPD_flag den Wert FALSE angenommen hat, wird die Anwendung des PPD-Algorithmus überprüft. Wenn der PPD-Algorithmus angewendet wird, wird immer die Zelle verworfen, die nicht die letzte Zelle eines Rahmens darstellt. Andernfalls wird die Zelle in die Warteschlange übernommen und der PPD-Algorithmus wird nicht für die nächste Ankunft einer Zelle angewendet. Wenn der PPD-Algorithmus nicht angewendet wird, können aber andere Annahme-Algorithmen für eine Zelle gesteuert werden. Beispielsweise kann die Funktion append_cell verwendet werden oder die Zelle verworfen werden.

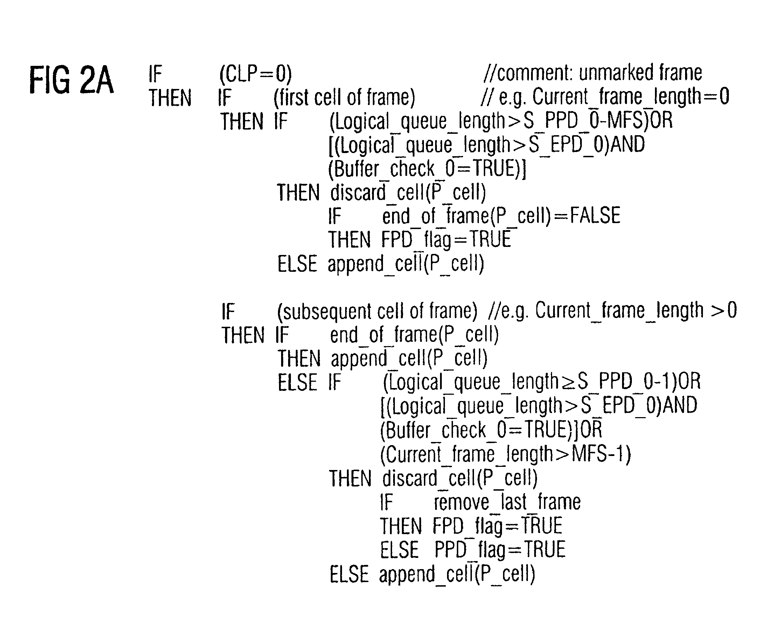

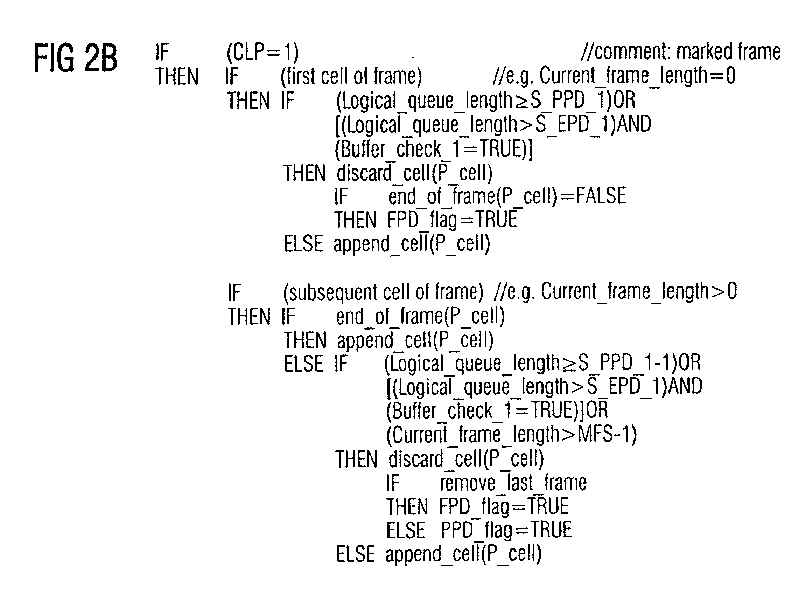

In Figur 2 ist der Entscheidungsalgorithmus aufgezeigt. Hierbei werden niederpriore Zellen von Hochprioren Zellen unterschieden. Für hochpriore Zellen (CLP = 0) gilt:

Wenn die in Frage kommende Zelle die erste Zelle des Rahmens ist, muß zunächst entschieden werden, ob diese Zelle und die verbleibenden Zellen des Rahmens verworfen werden oder ob die Zelle in die Warteschlange aufgenommen wird. Gründe, den Rahmen zu verwerfen, liegen beispielsweise darin, daß die Warteschlange weniger freien Zellenspeicherplatz zur Verfügung hat, als die Größe MFS. Weitere Gründe können darin liegen, daß die Länge der Warteschlange sich oberhalb der EPD_0 Schwelle befindet und der Zustand des Pufferspeichers zugleich anzeigt, daß hochpriore Rahmen verworfen werden solen.

Wenn die Zelle die einzige Zelle des Rahmens ist, stellt sie gleichzeitig das Ende des Rahmens dar und das FPD_flag wird nicht gesetzt, andernfalls wird es gesetzt.

Wenn die Zelle nicht die erste Zelle des Rahmens ist, werden eine oder mehr Zellen des Rahmens in die Warteschlange aufgenommen. Andernfalls wird die decide_cell Funktion nicht angewendet. Wenn sie die letzte Zelle des Rahmens ist, wird sie in jedem Fall akzeptiert und in die Warteschlange aufgenommen. Wenn sie nicht die letzte Zelle des Rahmens ist, wird die Zelle verworfen, wenn folgende Bedingung erfüllt ist:

Es muß höchstens ein freier Speicherplatz für eine Zelle in der Warteschlange vorhanden sein oder wenn die derzeitige Länge der Warteschlange oberhalb der Schwelle EPD_0 ist und der Pufferspeicher anzeigt, daß hochpriore Rahmen verworfen werden sollen oder wenn die bisherige Länge des Rahmens oberhalb der Größe MFS - 1 ist. Der Grund für eine freie Zelle liegt darin, genügend Speicherplatz für die letzte Zelle des Rahmens vorzuhalten. Der Grund für die Größe MFS - 1 liegt darin, daß die Zelle nicht die letzte Zelle des Rahmens ist und wenn die gegenwärtige Länge des Rahmens die Größe MFS - 1 übersteigt auch der komplette Rahmen die Größe MFS übersteigt. Wenn die Zelle verworfen werden soll, sollte, wenn möglich, der erste Teil des Rahmens von der Warteschlange entfernt werden und das FPD_flag gesetzt werden. Andernfalls wird das PPD_flag gesetzt.

Für niederpriore Zellen,das heißt Zellen, die die Eigenschaft CLP = 1 aufweisen, sind die durchzuführenden Handlungen ähnlich wie oben geschildert, aber die Schwellen werden wie folgt für niederpriore Zellen definiert:

Die Variable Logical_queue_length ist die Länge der Warteschlange bei Ankunft der Zelle und die Variable Current_frame_length gibt den Wert der Variablen bei Zellankunft wieder. Anfangs wird die Variable Current_frame_length auf 0 gesetzt. Sie wird um 1 erhöht, wenn eine Zelle in die Warteschlange aufgenommen wird. Sie wird auf 0 gesetzt, wenn das Ende des Rahmens angekommen ist oder wenn der letzte Rahmen aus der Warteschlange unter Benutzung des LPD-Algorithmus entfernt worden ist. Die erste Zelle des Rahmens wird in der Regel durch die Variable Current_frame_length = 0 erkannt.

## Patentansprüche

1. Verfahren zum Entfernen von ATM-Zellen aus einer ATM-Kommunikationseinrichtung, mit
einer Mehrzahl von ATM-Zellen, die jeweils zu mehreren einem gemeinsamen Rahmen zugeordnet sind, und die in verbindungsspezifischen Warteschlangen gespeichert werden, und mit
einem ersten Algorithmus, mittels dem bis auf die erste und letzte ATM-Zelle eines Rahmens alle neu eintreffenden Zellen des Rahmens entfernt werden,
einem zweiten Algorithmus, mittels dem alle ATM-Zellen eines Rahmens, von der ersten bis zur letzten Zelle beim Eintreffen in eine Warteschlange aus der ATM-Kommunikationseinrichtung entfernt werden,
**dadurch gekennzeichnet,**
**daß** ein Anwender zu Beginn eines Übertragungsvorganges eine maximale Anzahl der ATM-zellen pro Rahmen angibt, mit der ATM-Zellen gesendet werden,
**daß** im Falle, daß diese Anzahl überschritten wird, der zugehörige Rahmen verworfen oder der erste Algorithmus angewendet wird.

2. Verfahren nach Anspruch 1,
**dadurch gekennzeichnet,**
**daß** die Länge einer Warteschlange verbindungsindividuell verwaltet ist.

3. Verfahren nach Anspruch 1 oder 2,
**dadurch gekennzeichnet,**
**daß** eine konstante Größe MFS pro Verbindung benutzt wird, die ein Maß für die maximale Rahmengröße einer Verbindung ist.

4. Verfahren nach Anspruch 1 bis 3,
**dadurch gekennzeichnet,**
**daß** pro Verbindung die Anzahl der Zellen gespeichert wird, die für diese Verbindung seit dem Ende des letzten Rahmens für diese Verbindung eingetroffen sind.

5. Verfahren nach einem der vorstehenden Ansprüche,
**dadurch gekennzeichnet,**
**daß** keine hochprioren Zellen für eine Verbindung gespeichert werden, wenn die Länge der Warteschlange für diese Verbindung gleich einer von dieser Verbindung unabhängige Größe ist, die ein Maß für eine feste obere Grenze der Warteschlange darstellt.

6. Verfahren nach einem der vorstehenden Ansprüche,
**dadurch gekennzeichnet,**
**daß** wenn hochpriore Rahmen die maximale Rahmengröße nicht überschreiten, der erste Algorithmus für diese Rahmen nicht angewendet wird.

7. Verfahren nach einem der vorstehenden Ansprüche,
**dadurch gekennzeichnet,**
**daß** eine bestimmte Größe eines Pufferspeichers für hochpriore Zellen pro Verbindung vorgehalten wird und niederpriore Zellen zu diesem Speicherbereich keinen Zugang erhalten.

8. Verfahren nach einem der vorstehenden Ansprüche,
**dadurch gekennzeichnet,**
**daß** keine niederprioren Zellen für eine Verbindung gespeichert werden, wenn die Länge der Warteschlange für diese Verbindung wenigstens einer Größe S_PPD_1 = S_EPD_1 + MFS ist, wobei S_EPD_1 unabhängig von dieser Verbindung ist und maximale Rahmengröße von der Verbindung abhängt.

9. Verfahren nach einem der vorstehenden Ansprüche,
**dadurch gekennzeichnet,**
**daß** hochpriore Rahmen vollkommen verworfen werden, wenn bei Ankunft der ersten Zelle einer Verbindung weniger als die maximale Rahmengröße in der logischen Warteschlage für diese Verbindung übrigbleibt oder die logische Warteschlange eine S_EPD_0 Schwelle überschreitet und der Zustand des Pufferspeichers anzeigt, daß hochpriore Rahmen verworfen werden sollen.

10. Verfahren nach einem der vorstehenden Ansprüche,
**dadurch gekennzeichnet,**
**daß** hochpriore Rahmen teilweise verworfen werden, wenn bei Ankunft einer Zelle, die weder die erste noch die letzte Zelle eines Rahmens ist, die logische Werteschlange höchstens einen Speicherplatz frei hat, oder wenn die Länge der logischen Warteschlange einen verbindungsspezifischen Schwellenwert S_PPD_0 überschreitet oder wenn der Füllstand des Pufferspeichers andeutet, daß hopchpriore Rahmen verworfen werden sollen oder wenn die Länge des Rahmens länger als die maximale Rahmengröße Zellen beträgt.

11. Verfahren nach einem der vorstehenden Ansprüche,
**dadurch gekennzeichnet,**
**daß** niederpriore Rahmen komplett verworfen werden, wenn bei Ankunft der ersten Zelle dieser Verbindung die Länge der Warteschlange für diese Verbindung größer als eine Variable S_PPD_1 ist oder wenn die Länge der Warteschlange länger als eine Größe S_EPD_1 ist und der Zustand des Pufferspeichers anzeigt, daß niederpriore Rahmen verworfen werden sollen.

12. Verfahren nach einem der vorstehenden Ansprüche,
**dadurch gekennzeichnet,**
**daß** niederpriore Rahmen für eine Verbindung teilweise verworfen werden, wenn bei Ankunft einer Zelle, die weder die erste noch die letzte Zelle des Rahmens ist, die Länge der Warteschlange für diese Verbindung größer als eine Variable S_PPD_1 - 1 ist oder die Länge der Warteschlange größer als eine Variable S_EPD_1 ist und der Pufferspeicherstatus anzeigt, daß niederpriore Rahmen verworfen werden sollen oder wenn der Rahmen länger als die maximale Rahmengröße ist.

13. Verfahren nach einem der vorherstehenden Ansprüche,
**dadurch gekennzeichnet,**
**daß** der warteschlangenspezifische Wert S_EPD_0 größer als der Wert S_PPD_1 und kleiner als der Wert PPD_0 - MFS ist, wobei der Wert S_PPD_0 ein Maß für eine feste obere Grenze der Warteschlange darstellt.

14. Verfahren nach einem der vorstehenden Ansprüche,
**dadurch gekennzeichnet,**
**daß** für Pufferspeicher mit geringer Füllung hochpriore Rahmen deren erste Zelle übernommen worden ist und deren Rahmenlänge die maximale Rahmengröße (MFS) nicht überschreitet, nicht dem ersten Algorithmus unterworfen werden.

15. Verfahren nach einem der vorstehenden Ansprüche,
**dadurch gekennzeichnet,**
**daß** für Pufferspeicher mit geringer Füllung niederpriore Rahmen deren erste Zelle übernommen worden ist und deren Rahmenlänge die maximale Rahmengröße nicht übersteigt, dem ersten Algorithmus nicht unterworfen werden.

16. Verfahren nach einem der vorstehenden Ansprüche,
**dadurch gekennzeichnet,**
**daß** das EPD-flag und ein FPD_flag nicht zur gleichen Zeit gesetzt werden.

17. Verfahren nach einem der vorstehenden Ansprüche,
**dadurch gekennzeichnet,**
**daß** pro Verbindung die Werte MFS + S_EPD_0 gespeichert werden und die Variablen EPD_FLAG,FPD_FLAG und current_Frame_length verwaltet werden, wobei die Variable current_Frame_length ein Maß für die Länge des momentanen Rahmens ist.

## Claims

1. Method for removal of ATM cells from an ATM communications device, having
a number of ATM cells, a number of which are in each case assigned to a common frame and which are stored in connection-specific queues, and having
a first algorithm by means of which, with the exception of the first and last ATM cell in a frame, all the newly arriving cells in the frame are removed,
a second algorithm by means of which all the ATM cells in a frame, from the first to the last cell, are removed on arrival in a queue from the ATM communications device,
**characterized**
**in that**, at the start of a transmission process, a user indicates the maximum number of ATM cells per frame, using which number the ATM cells are transmitted,
**in that** QL in the situation where this number is exceeded, the associated frame is discarded or the first algorithm is used.

2. Method according to Claim 1,
**characterized**
**in that** the length of a queue is controlled on a connection-specific basis.

3. Method according to Claim 1 or 2,
**characterized**
**in that** a constant value MFS is used per connection, and is a measure of the maximum frame size of the connection.

4. Method according to Claims 1 to 3,
**characterized**
**in that**, per connection, the number of the cells which have arrived for this connection since the end of the last frame for this connection is stored.

5. Method according to one of the preceding claims,
**characterized**
**in that** no high-priority cells are stored for a connection if the length of the queue for this connection is equal to a value which is independent of this connection and which represents a measure for a fixed upper limit for the queue.

6. Method according to one of the preceding claims,
**characterized**
**in that**, if no high-priority frames exceed the maximum frame size, the first algorithm is not used for these frames.

7. Method according to one of the preceding claims,
**characterized**
**in that** a specific amount of a buffer store is reserved for high-priority cells per connection, and low-priority cells are not given access to this memory area.

8. Method according to one of the preceding claims,
**characterized**
**in that** no low-priority cells are stored for a connection provided the length of the queue for this connection is of at least a size S_PPD_1 = S_EPD_1 + MFS, where S_EPD_1 is independent of this connection and the maximum frame size depends on the connection.

9. Method according to one of the preceding claims,
**characterized**
**in that** high-priority frames are completely discarded if, on arrival of the first cell of a connection, less than the maximum frame size remains in the logic queue for this connection or the logic queue exceeds an S_EPD_0 threshold and the status of the buffer store indicates that high-priority frames should be discarded.

10. Method according to one of the preceding claims,
**characterized**
**in that** high-priority frames are discarded if, on arrival of a cell which is neither the first nor the last cell in a frame, the logic value queue has at most one free memory location, or if the logic queue length exceeds a connection-specific threshold value S_PPD_O, or if the filling level of the buffer store indicates that high-priority frames should be rejected, or if the length of the frame is greater than the maximum frame size cells.

11. Method according to one of the preceding claims,
**characterized**
**in that** low-priority frames are completely discarded if, on arrival of the first cell of this connection, the length of the queue for this connection is greater than a variable S_PPD_1 or if the length of the queue is longer than a value S_EPD_1 and the state of the buffer store indicates that low-priority frames should be discarded.

12. Method according to one of the preceding claims,
**characterized**
**in that** some low-priority frames for a connection are discarded if, on arrival of a cell which is neither the first nor the last cell in the frame, the length of the queue for this connection is greater than a variable S_PPD_1 - 1 or the length of the queue is greater than a variable S_EPD_1 and the status of the buffer store indicates that low-priority frames should be discarded, or if the frame is longer than the maximum frame size.

13. Method according to one of the preceding claims,
**characterized**
**in that** the queue-specific value S_EPD_0 is greater than the value S_PPD_1 and less than the value PPD_0 - MFS, the value S_PPD_0 representing a measure for a fixed upper limit for the queue.

14. Method according to one of the preceding claims,
**characterized**
**in that**, if the buffer store filling level is low, high-priority frames whose first cell has been transferred and whose frame length does not exceed the maximum frame size (MFS) are not subjected to the first algorithm.

15. Method according to one of the preceding claims,
**characterized**
**in that**, if the buffer store filling level is low, low-priority frames whose first cell has been transferred and whose frame length does not exceed the maximum frame size are not subjected to the first algorithm.

16. Method according to one of the preceding claims,
**characterized**
**in that** the EPD_flag and FPD_flag are not set at the same time.

17. Method according to one of the preceding claims,
**characterized**
**in that** the values MFS + S_EPD 0 are stored and the variables EPD_FLAG, FPD_FLAG and current_Frame_length are controlled for each connection, the variable current_Frame_length being a measure of the length of the current frame.

## Revendications

1. Procédé pour éliminer des cellules à mode de transfert asynchrone (MTA) d'un dispositif de communication MTA, avec
un grand nombre de cellules MTA qui sont affectées respectivement à plusieurs à un bloc commun et qui sont mémorisées dans des files d'attente spécifiques à la liaison, et avec un premier algorithme au moyen duquel toutes les nouvelles cellules entrantes du bloc sont éliminées, sauf la première et la dernière cellule MTA,
un second algorithme au moyen duquel toutes les cellules MTA d'un bloc, de la première jusqu'à la dernière, sont éliminées du dispositif de communication MTA à leur arrivée dans une file d'attente,
**caractérisé en ce que**
un utilisateur indique au début d'une opération de transmission un nombre maximal des cellules MTA par bloc, avec lequel les cellules MTA doivent être envoyées,
**en ce que**, au cas où ce nombre est dépassé, le bloc correspondant est rejeté ou le premier algorithme est appliqué.

2. Procédé selon la revendication 1,
**caractérisé en ce que**
la longueur d'une file d'attente est gérée individuellement selon la liaison.

3. Procédé selon la revendication 1 ou 2,
**caractérisé en ce que**
une grandeur constante MFS est utilisée par liaison, celle-ci étant une mesure pour la taille maximale du bloc d'une liaison.

4. Procédé selon les revendications 1 à 3,
**caractérisé en ce que**
le nombre des cellules qui sont arrivées pour cette liaison depuis la fin du dernier bloc est mémorisé par liaison.

5. Procédé selon l'une des revendications précédentes,
**caractérisé en ce que**
aucune cellule à priorité haute n'est mémorisée pour une liaison lorsque la longueur de la file d'attente pour cette liaison est égale à une grandeur indépendante de cette liaison, qui représente une mesure pour une limite supérieure fixe de la file d'attente.

6. Procédé selon l'une des revendications précédentes,
**caractérisé en ce que**
lorsque des blocs à priorité haute ne dépassent pas la taille maximale de bloc, le premier algorithme n'est pas appliqué pour ces blocs.

7. Procédé selon l'une des revendications précédentes,
**caractérisé en ce que**
une certaine taille d'une mémoire tampon est réservée par liaison pour les cellules à priorité haute et que les cellules à priorité basse n'ont pas d'accès à cette partie de mémoire.

8. . Procédé selon l'une des revendications précédentes,
**caractérisé en ce que**
aucune cellule à priorité basse n'est mémorisée pour une liaison lorsque la longueur de la file d'attente pour cette liaison est au moins égale à une grandeur S_PPD_1 = S_EPD_1 + MFS, S_EPD_1 étant indépendante de cette liaison et la taille maximale du bloc dépendant de cette liaison.

9. Procédé selon l'une des revendications précédentes,
**caractérisé en ce que**
les blocs à priorité haute sont complètement rejetés lorsque, à l'arrivée de la première cellule d'une liaison, moins de la taille maximale du bloc est restante dans la file d'attente logique pour cette liaison ou que la file d'attente logique dépasse un seuil S_EPD_0 et que l'état de la mémoire tampon indique que les blocs à priorité haute doivent être rejetés.

10. Procédé selon l'une des revendications précédentes,
**caractérisé en ce que**
les blocs à priorité haute sont rejetés en partie lorsque, à l'arrivée d'une cellule qui n'est ni la première ni la dernière cellule d'un bloc, la file d'attente logique a au maximum une place en mémoire de libre ou lorsque la longueur de la file d'attente logique dépasse une valeur de seuil S_PPD_0 spécifique à la liaison ou lorsque l'état de remplissage de la mémoire tampon indique que les blocs à priorité haute doivent être rejetés ou lorsque la longueur du bloc est plus longue que la taille maximale de bloc.

11. Procédé selon l'une des revendications précédentes,
**caractérisé en ce que**
les blocs à priorité basse sont complètement rejetés lorsque, à l'arrivée de la première cellule de cette liaison, la longueur de la file d'attente pour cette liaison est plus grande qu'une variable S_PPD_1 ou lorsque la longueur de la file d'attente est plus longue qu'une taille S_EPD_1 et que l'état de la mémoire tampon indique que les blocs à priorité basse doivent être rejetés.

12. Procédé selon l'une des revendications précédentes,
**caractérisé en ce que**
les blocs à priorité basse sont rejetés en partie pour une liaison lorsque, à l'arrivée d'une cellule, qui n'est ni la première ni la dernière cellule du bloc, la longueur de la file d'attente pour cette liaison est plus grande qu'une variable S_PPD_1 - 1 ou que la longueur de la file d'attente est plus longue qu'une variable S_EPD_1 et que l'état de la mémoire tampon indique que les blocs à priorité basse doivent être rejetés ou lorsque le bloc est plus long que la taille maximale de bloc.

13. Procédé selon l'une des revendications précédentes,
**caractérisé en ce que**
la valeur spécifique à la file d'attente S_EPD_0 est supérieure à la valeur S_PPD_1 et est inférieure à la valeur PPD_0 - MFS, la valeur S_PPD_0 représentant une mesure pour une limite supérieure fixe de la file d'attente.

14. Procédé selon l'une des revendications précédentes,
**caractérisée en ce que**,
pour les mémoires tampon ayant un remplissage minime, des blocs à priorité haute dont la première cellule a été prise en compte et dont la longueur de bloc ne dépasse pas la taille de bloc maximale (MFS) ne sont pas exposés au premier algorithme.

15. Procédé selon l'une des revendications précédentes,
**caractérisé en ce que**,
pour des mémoires tampon ayant un remplissage moindre, des blocs à priorité basse dont la première cellule a été prise en compte et dont la longueur de bloc ne dépasse pas la taille de bloc maximale ne sont pas exposés au premier algorithme.

16. Procédé selon l'une des revendications précédentes,
**caractérisé en ce que**
le marqueur EPD_flag et un marqueur FPD_flag ne sont pas mis en même temps.

17. Procédé selon l'une des revendications précédentes,
**caractérisé en ce que**
les valeurs MFS + S_EPD_0 sont mémorisées par liaison et les variables EPD_FLAG, FPD_FLAG et current_Frame_length sont gérées, la variable current_Frame_length étant une mesure pour la longueur du bloc actuel.
